# EUROPEAN PATENT APPLICATION

(11) **EP 1 318 324 A2**
(43) Date of publication of application: **11.06.2003**
(21) Application number: 02079832.8
(22) Date of filing: 20.11.2002
(51) Int. Cl.: F16F 9/53, F16F 9/32

(54) **Vehicle damper assembly**

(30) Priority: 07.12.2001 US 11694
(71) Applicant: Delphi Technologies, Inc., Troy, MI 48007 (US)
(72) Inventor: Oliver, Michael L., Xenia, Oh 45395 (US); Jensen, Eric Lee, Dayton, OH 45429 (US); Kruckemeyer, William C., Beavercreek, OH 45434 (US); Bishop, Todd A., Centerville, OH 45459-5019 (US)
(74) Representative: Denton, Michael John

(57) **Abstract**

The invention provides a vehicle damper assembly 20, 30 including a housing 21, 40 including a fluid 22, 41 carried therein, a piston 23, 50 slidably carried in the housing 21, 40, and a rod 24, 60 operably attached to the piston 23, 50. The piston 23, 50 includes a curved portion 26, 51 positioned adjacent a housing inner surface 27, 42. The invention further provides a vehicle damper assembly 20, 30 including housing 21, 40 means for carrying a fluid 22, 41, piston 23, 50 means from reducing binding contact with the housing 21, 40 means, and rod 24, 60 means for moving the piston 23, 50 means. The invention further provides a method of reducing binding contact in a vehicle damper assembly 20, 30. A longitudinal radius 28 is determined for a piston 23, 50 based on a housing inner surface 27, 42. The piston 23, 50 is formed with a curved portion 26, 51 based on the longitudinal radius 28. The curved portion 26, 51 is positioned adjacent the housing inner surface 27, 42.

## Description

### Technical Field

The present invention relates generally to vehicular suspension systems. More particularly, the invention relates to a vehicle damper assembly and method for reducing binding contact.

### Background of the Invention

Linear suspension dampers, such as shock absorbers and McPherson struts, may include a rod and piston moving within a housing. Suspension movements transmitted to the rod and piston may be dampened by a fluid carried within the housing. As the fluid flows between a piston outer surface and housing inner surface, a dampening friction force is generated. To ensure consistent and reliable damper performance, several design factors may be considered.

One consideration in damper design relates to friction and wear. Some current damper designs include a cylindrical piston sized to closely fit within a cylindrical housing. During damper operation, the piston may repeatedly contact the inner surface of the housing resulting in excessive wear. A small fluid-filled gap may be provided between the piston outer surface and housing inner surface to reduce friction and wear. The fluid-filled gap acts as a hydrodynamic "bearing" between the piston and housing engagement surfaces. Control of the fit and fluid flow gap size between the piston and housing is important in maintaining adequate hydrodynamic bearing. For example, sufficient narrowing of the flow gap size may compromise hydrodynamic bearing and result in excessive wear. Accordingly, it would be desirable for a damper design to provide adequate hydrodynamic bearing to minimize friction and wear.

Another consideration in damper design relates to damper assembly misalignment. During damper assembly, inherent process variation may result in a misalignment between the rod and outside surface of the piston. Typically, the fit and fluid gap between the piston and housing provides hydrodynamic bearing minimizing friction and wear. Misalignment of the parts, however, may compromise hydrodynamic bearing resulting in repeated contact between surfaces. The contact may produce excessive frictional wear thereby shortening damper lifespan. If the misalignment is sufficient, the piston may not be able to freely slide within the tube due to the binding contact. The binding contact may cause the piston to "seize" within the housing. Accordingly, it would be desirable for a damper design to reduce the consequences associated with damper assembly misalignment.

Therefore, it would be desirable to provide a vehicle damper assembly and method for reducing binding contact that overcomes the aforementioned and other disadvantages.

### Summary of the Invention

One aspect of the present invention provides a vehicle damper assembly including a housing including a fluid carried therein, a piston slidably carried in the housing, and a rod operably attached to the piston. The piston includes a curved portion positioned adjacent a housing inner surface. The fluid may be magnetorheological fluid. The curved portion may include a longitudinal radius and/or form a barrel shape. The curved portion may contact the housing inner surface during operation of the vehicle damper assembly. The curved portion includes piston means for reducing binding contact and/or means for maintaining hydrodynamic bearing between the piston and the housing inner surface.

Another aspect of the invention provides a vehicle damper assembly including housing means for carrying a fluid, piston means for reducing binding contact with the housing means, and rod means for moving the piston means. The fluid may be magnetorheological fluid. The vehicle damper assembly may further include means for maintaining hydrodynamic bearing between the piston means and the housing means.

Another aspect of the invention provides a method of reducing binding contact in a vehicle damper assembly. A longitudinal radius is determined for a piston based on a housing inner surface. The piston is formed with a curved portion based on the longitudinal radius. The curved portion is positioned adjacent the housing inner surface. Hydrodynamic bearing may be maintained between the piston and the housing inner surface.

The foregoing and other features and advantages of the invention will become further apparent from the following detailed description of the presently preferred embodiments, read in conjunction with the accompanying drawings. The detailed description and drawings are merely illustrative of the invention, rather than limiting, the scope of the invention being defined by the appended claims and equivalents thereof.

### Brief Description of the Drawings

Figure 1 is an exaggerated view of a prior art vehicle damper assembly including a piston experiencing binding contact;
Figure 2 is an exaggerated view of a vehicle damper assembly made in accordance with the present invention;
Figure 3 is a perspective view of a vehicle damper assembly made in accordance with the present invention; and
Figure 4 is a detailed perspective view of a portion of the vehicle damper assembly of Figure 3.

### Description of the Preferred Embodiment

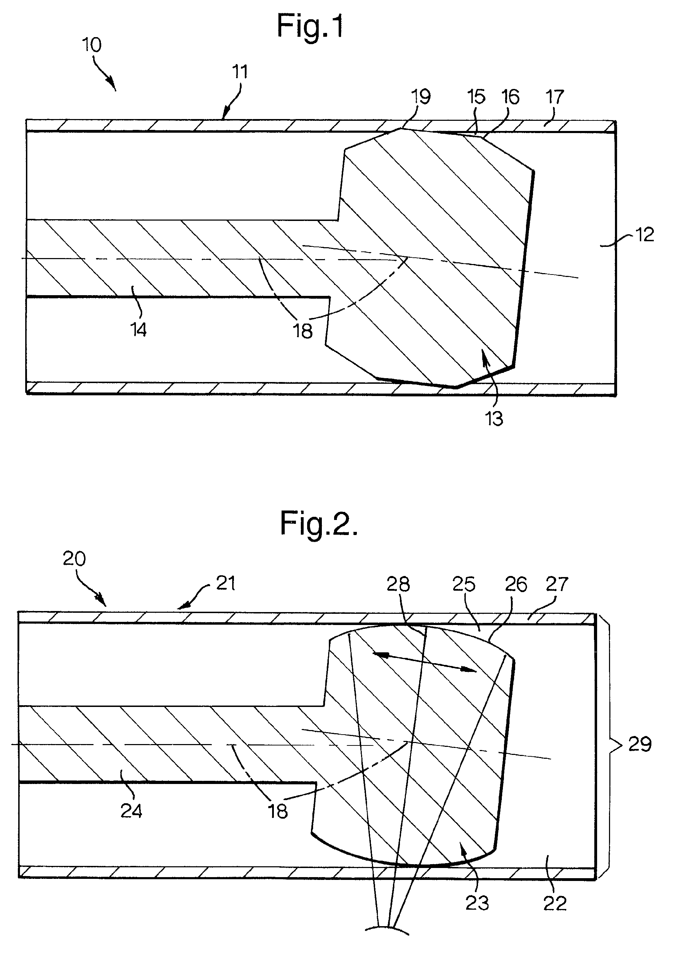

Referring to the drawings, FIG. 1 is an exaggerated view (i.e., not drawn to scale) of a prior art vehicle damper assembly shown generally by numeral (10). Vehicle damper assembly (10) may include a housing (11) including a fluid (12) carried therein, a piston (13) slidably carried in housing (11), and a rod (14) operably attached to piston (13).

During operation, piston (13) may move within housing (11) in response to vehicle suspension movements transmitted through rod (14). Piston (13) movements may force fluid (12) between at least one opening (15) formed between a piston surface (16) and housing inner surface (17). Vehicle suspension movements may be dampened by fluid frictional forces generated against piston (13) movements.

Vehicle damper assembly (10) is shown in a misaligned state (i.e., piston 13 and rod 14 do not share a common central axis 18). The misalignment may be due to variation in the assembly process. Misalignment may reduce opening (15) size and compromise hydrodynamic bearing resulting in repeated contact between surfaces (16, 17). The contact may produce excessive frictional wear thereby shortening damper assembly (10) lifespan. Misalignment may also promote binding contact between surfaces (16, 17). Piston (13), having a cylindrical shape, may experience binding contact, especially when misaligned. The binding contact may occur where piston surface (16) is angular in shape, such as at a corner portion 19. Excessive binding contact may cause piston (13) to "seize" within housing (11).

FIG. 2 is an exaggerated view of a vehicle damper assembly (20) made in accordance with the present invention. Vehicle damper assembly (20) may include a housing (21) including a fluid (22) carried therein, a piston (23) slidably carried in housing (21), and a rod (24) operably attached to piston (23). Piston (23) may include at least one curved portion (26) positioned adjacent a housing inner surface (27). In the following description, curved portion is defined as a curved surface that projects in an orthogonal direction from a piston central axis.

During operation, piston (23) may move within housing (21) in response to vehicle suspension movements transmitted through rod (24). Piston (23) movements may force fluid (22) between at least one opening (25) formed by piston curved portion (26) and housing inner surface (27). Vehicle suspension movements may be dampened by fluid frictional forces generated against piston (23) movements.

Vehicle damper assembly (20) is shown in a misaligned state. Curved portion (26) may contact housing inner surface (27) during vehicle damper assembly (20) operation, especially when the vehicle damper assembly (20) is misaligned. Curved portion (26) may reduce the consequences of vehicle damper assembly (20) misalignment. For example, curved portion (26) may provide means for maintaining hydrodynamic bearing between the curved portion (26) and housing inner surface (27). As such, curved portion (26) may reduce contact between housing (21) and piston (23) thereby reducing damper assembly (20) wear. Curved portion (26) may also provide means for reducing binding contact of surfaces (26), (27). A curved surface may be less likely to bind than an angular surface. As such, curved portion (26) may prevent piston (23) from seizing within housing (21).

Binding contact may be reduced by forming piston (23) with curved portion(s) (26) based on a longitudinal radius (28). The longitudinal radius (28) may be determined for a particular piston by considering the housing inner surface (27). In one embodiment, longitudinal radius (28) may be about 5 to 15 times a housing inner surface diameter (29). Preferably, the longitudinal radius (28) may be about 10 times housing inner diameter (29). A longitudinal radius (28) greater than 15 times inner surface diameter (29) may not provide enough curvature to reduce binding contact. A longitudinal radius (28) less than 5 times inner surface diameter (29) may provide excessive curvature thereby compromising hydrodynamic bearing.

The determined longitudinal radius (28) may then be partially rotated about a central point forming an arc or parabola (as shown by double arrow). Curved portion (26) may be based on the shape of the arc or parabola. In one embodiment, the longitudinal radius (28) may form a piston barrel shape (i.e., a cylindrical shape having a variable diameter, the diameter being wider near a middle portion than end portions). Thus, the piston barrel shape would include a generally cylindrical shape having bent sides based on the arc or parabolic shapes. The barrel shape may provide an acceptable shape for maintaining hydrodynamic bearing by providing a relatively long gap of effective engagement (i.e., area where curved portion 26 and housing inner surface 27 are substantially parallel and separated by a relatively small gap of fluid 22). Alternatively, a spherical shape may not provide as acceptable hydrodynamic bearing due to its relatively shorter gap of effective engagement. Those skilled in the art will recognize that the curved portion (26) need not be based on a simple arc or parabola. For example, curved portion (26) may be based on numerous simple and/or compound curved surfaces while providing the advantages associated with the present invention.

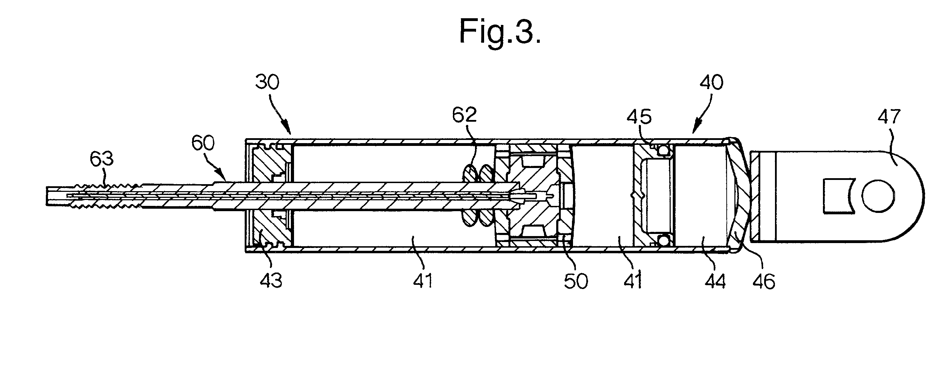

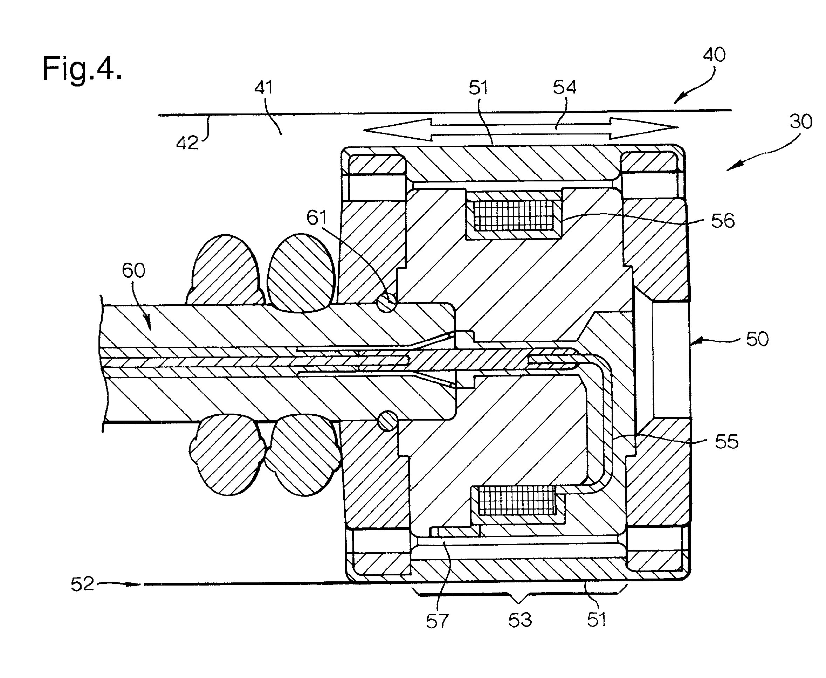

FIG. 3 & 4, wherein like reference numerals refer to like elements, are perspective views of a vehicle damper assembly (30) made in accordance with the present invention. Those skilled in the art will recognize that vehicle damper assembly (30) may include a number of alternate damper designs. For illustrative purpose, vehicle damper assembly (30) is shown and described as a linear acting fluid damper employing magnetic tuning with a magnetorheological fluid to effect desired damping level.

Vehicle damper assembly (30) includes a housing (40) including a fluid (41) carried therein, a piston (50) slidably carried in housing (40), and a rod (60) operably attached to piston (50). The housing (40), piston (50), and rod (60) may be formed from a number of sufficiently rigid materials such as steel, aluminum, metal, metal alloy, composites, and the like. Fluid (41) may be any number of fluids used for providing dampening characteristics. In one embodiment, piston (50) may be formed from low-carbon steel with nickel plating and fluid (41) may be magnetorheological fluid. Low-carbon steel may provide electro-magnetic induction properties compatible with magnetorheological fluid use.

As shown in FIG. 4, piston (50) includes at least one curved portion (51) positioned adjacent a housing inner surface (42). In one embodiment, curved portion (51) extends from piston (50) surface outwardly for a profile distance (52) and length (53). The profile distance (52) and length (53) may be based on a longitudinal radius to maintain hydrodynamic bearing and reduce binding contact. In one embodiment, piston (50) may include curved portion (51) forming a barrel shape. The barrel shape may provide a relatively long gap of effective engagement (54) allowing fluid (41) to flow during piston (50) movement. In addition, the barrel shape may reduce binding contact between piston (50) and housing inner surface (42). Those skilled in the art will recognize that curved portion (51) shape, profile distance, length, and number may vary while providing the advantages associated with the present invention.

Piston (50) may include one or more wires (55) for providing electrical current to one or more coils (56). Fluid (41) may flow through one or more ports (57) formed through piston (50). The coils (56) provide means for modulating the viscosity of magnetorheological fluid (41) as it flows through ports (57) thereby effecting desired dampening level. Piston (50) may be attached to rod (60) with one or more ring clips (61) or other attachment means.

Referring again to FIG. 3, rod (60) may include one or more bumpers (62) to limit piston (50) range of motion and "quiet" piston (50) contact with a first housing end portion (43). Bumpers (62) may be formed from an elastic material compatible with fluid (41), such as a polyurethane material. Housing (40) may include a gas (44) contained by a cap (45) to provide a force against piston (50) as it travels toward a second housing end portion (46). Housing (40) and rod (60) may include a wheel assembly attachment means (47) and a vehicle chassis attachment means (63), respectively.

While the embodiments of the invention disclosed herein are presently considered to be preferred, various changes and modifications can be made without departing from the spirit and scope of the invention. For example, the damper assembly configuration, and method for determining a longitudinal radius are not limited to any particular design or sequence. Specifically, the curved portion shape, location, and number, the damper design, and longitudinal radius may vary without limiting the utility of the invention. Upon reading the specification and reviewing the drawings hereof, it will become immediately obvious to those skilled in the art that myriad other embodiments of the present invention are possible, and that such embodiments are contemplated and fall within the scope of the presently claimed invention. The scope of the invention is indicated in the appended claims, and all changes that come within the meaning and range of equivalents are intended to be embraced therein.

## Claims

1. A vehicle damper assembly 20, 30 comprising:
a housing 21, 40 including a fluid 22, 41 carried therein;
a piston 23, 50 slidably carried in the housing 21, 40, the piston 23, 50 including a curved portion 26, 51, the curved portion 26, 51 positioned adjacent a housing inner surface 27, 42; and
a rod 24, 60 operably attached to the piston 23, 50.

2. The assembly 20, 30 of claim 1 wherein the fluid 22, 41 comprises magnetorheological fluid.

3. The assembly 20, 30 of claim 1 wherein the curved portion 26, 51 comprises a longitudinal radius 28.

4. The assembly 20, 30 of claim 3 wherein the longitudinal radius 28 comprises a barrel shape.

5. The assembly 20, 30 of claim 1 wherein the curved portion 26, 51 contacts the housing inner surface 27, 42 during operation of the vehicle damper assembly 20, 30.

6. The assembly 20, 30 of claim 1 wherein the curved portion 26, 51 comprises piston 23, 50 means for reducing binding contact between the curved portion 26, 51 and the housing inner surface 27, 42.

7. The assembly 20, 30 of claim 1 wherein the curved portion 26, 51 comprises means for maintaining hydrodynamic bearing between the piston 23, 50 and the housing inner surface 27, 42.

8. A vehicle damper assembly 20, 30 comprising:
housing 21, 40 means for carrying a fluid 22, 41;
piston 23, 50 means from reducing binding contact with the housing 21, 40 means; and
rod 24, 60 means for moving the piston 23, 50 means.

9. The assembly 20, 30 of claim 8 wherein the fluid 22, 41 comprises magnetorheological fluid.

10. The assembly 20, 30 of claim 8 wherein further comprising means for maintaining hydrodynamic bearing between the piston 23, 50 means and the housing 21, 40 means.

11. A method of reducing binding contact in a vehicle damper assembly 20, 30 comprising:
determining a longitudinal radius 28 for a piston 23, 50 based on a housing inner surface 27, 42;
forming the piston 23, 50 with a curved portion 26, 51 based on the longitudinal radius 28; and
positioning the curved portion 26, 51 adjacent the housing inner surface 27, 42.

12. The method of claim 12 wherein positioning the curved portion 26, 51 adjacent the housing inner surface 27, 42 comprises maintaining hydrodynamic bearing between the piston 23, 50 and the housing inner surface 27, 42.
